# EUROPEAN PATENT APPLICATION

(11) **EP 3 441 567 A1**
(43) Date of publication of application: **13.02.2019**
(21) Application number: 18187822.4
(22) Date of filing: 07.08.2018
(51) Int. Cl.: F01D 5/14, F01D 5/28, F03D 1/06, B29C 70/02, B29C 70/44, B29C 70/72, B29C 70/68, B29D 99/00, B29L 31/08, B29C 70/70, B64C 27/473

(54) **METHOD OF MANUFACTURING A WIND TURBINE BLADE ROOT PREFAB, AND A WIND TURBINE BLADE ROOT PREFAB**

(30) Priority: 08.08.2017 GB 201712722
(71) Applicant: DFS Composites Limited, Southampton Hampshire SO14 3JZ (GB)
(72) Inventor: RAJASINGAM, Damien, Southampton, Hampshire SO14 3JZ (GB); YOSEF, Feras Mohammad, Southampton, Hampshire SO14 3JZ (GB); PINO GONZÁLEZ, Diego Andrés, Southampton, Hampshire SO14 3JZ (GB)
(74) Representative: Barker Brettell LLP

(57) **Abstract**

A method of manufacturing a wind turbine blade root prefab (10) comprises firstly providing a mold cavity. Fiber layers are placed in the mold cavity. A layer of bonding material (28, 30), in the form of a flexible film of partially cured polymer, is laid on top of the fiber layers. A fastening element insert (24) for fastening the blade to a hub is fixed in the mold cavity, with a surface of the fastening element adjacent to the fiber layer, with the layer of bonding material (28, 30) between the fiber layer and the surface of the fastening element insert (24). Another layer of bonding material flexible film (28, 30) is laid in the mold on top of the fastening element (24). More layers of fiber are placed on top, and the mold cavity is closed. Liquid resin is admitted into the mold cavity to infuse the fiber layers. The resin and bonding material are then cured, to bond the fiber layers to the fastening element insert via the layer of bonding material.

## Description

The present invention relates to a method of manufacturing a wind turbine blade root prefab, and to a wind turbine blade root prefab itself. The invention also relates to a method of manufacturing a fastening element insert for a wind turbine blade root prefab, and to a fastening element insert for a wind turbine blade root prefab.

The root end of a wind turbine blade is a critical element of the structure because it forms the means of connection between the blade and rotor hub and therefore must adequately transfer all of the operational loads. Per unit of length, it is by far the heaviest section of the blade and therefore itself contributes significantly to the overall blade cost as well as the system loads for the wind turbine machine.

In the most conventional root connections, the thick fiberglass wall of the blade is cross-drilled in the radial direction to receive metal inserts having female threads for attachment to the male threaded studs which protrude axially for mounting to the rotor hub. Designers refer to this arrangement as a "T-Bolt" or "Ikea Fastener" connection. However this arrangement poses a major draw-back due to the high stress-concentrating effect of the cross-drilled holes in the fiberglass wall. Due to the stress concentration, the drill holes must be kept at least a minimum distance from one another, thereby reducing the number of studs for connection to the hub. This consequently results in increasing the blade root diameter, the rotor hub diameter, and thus the mass of the entire rotor increases. Another drawback is related to the fact that the preloaded bearing flange between the blade and hub is the fiberglass end face of the blade root. Due to the low compressive strength of fiberglass, the blade root must be thickened to reduce the bearing stresses to an acceptable level, thereby, again, increasing the mass of this arrangement.

As wind turbine blades have increased in size and the need to minimise mass and maximise load-carrying capability has become ever more important, a number of developments have occurred. The tendency has been to abandon the T-bolt arrangement in favour of an axially mounted female threaded steel bushing. This results in a more efficient load transfer between the connection studs and the fiberglass wall of the blade root, thereby allowing more studs spaced closely together, hence a proportionately smaller blade root diameter, rotor hub, and consequently lower mass of the rotor.

Rather than the mechanical interlocking nature of the T-bolt arrangement, the more recent axially mounted bushings rely entirely on adhesive bonding to transfer loads from the steel bushings into the fiberglass blade root wall. In conventional examples, a relatively small prefabricated element, known as a wind turbine blade "root prefab", is constructed which contains the female threaded steel insert bonded to a fiberglass element. The root prefab is later transferred to the main shell mold to be integrated into the final blade root. Several root prefabs are integrated into the main blade shell molding by attaching them to a fixation plate at the root end of the mold. Layers of glass fiber are laid underneath or above, or both under and over, the root prefabs. These glass fiber layers may be pre-impregnated with the resin matrix, or they can be dry fabrics which are later infused with resin using known techniques for resin fiber impregnation.

Conventional methods of constructing the root prefabs vary considerably. A number of examples are discussed below:
1. Individual Pultruded Stick with Bonded Insert:
   In this example, a relatively large section of fiberglass is pultruded to form the bulk fiberglass component of the Root Prefab. The pultruded section is slightly larger than the external diameter of a female threaded steel insert. The pultruded stick is then drilled at one end so that the steel insert can be inserted and bonded in place with a toughened bonding paste. The opposite end of the pultruded stick is chamfered in thickness to enable a smooth load transfer into the main blade shell. Whilst pultrusion is normally the lowest cost manufacturing process for producing fiberglass composites, the relatively large cross-sections of the pultruded sticks needed in this application necessitate very low processing speeds (pull rate) to maintain quality, and therefore the cost per unit mass is extremely high.
2. Individual Pultruded Stick with Integrated Insert:
   A variant of example 1 above has been used whereby the steel insert is fed into the pultruding process so as to eliminate the subsequent processes of drilling and bonding, thereby reducing the cost somewhat. However, the pultrusion cost remains extremely high and is considered very difficult to maintain sufficient quality.
3. Segmented Winding with Bonded Inserts:
   One method attempts to minimise the material cost for the bulk fiberglass component of the Root Prefab by using an automated, high speed winding process. A cylindrical mandrel is provided with the same diameter as the internal diameter of the blade root wall. Rolls of dry glass-fiber fabric are fed onto the mandrel and guided along its length, back and forth, after the fabric is immersed in resin bath to impregnate it with resin. After curing, a large cylindrical glass-fiber tube is produced. Subsequently, the root end face is machined flat and an array of axial holes is drilled for bonding in the steel inserts. Finally, the cylindrical tube is cut into radial segments to produce the root prefabs. Whilst this approach results in a very low material cost for the fiberglass component, one drawback is the very high capital cost of equipment and machinery, such as for the winding process, and it still requires the separate drilling and bonding processes for the inserts as in example 1
4. Semi-impregnated Layup with Integrated Inserts:
   A further proposed simple molding process uses the semi-impregnated structural fiberglass system, called SPRINT, developed by SP Systems Ltd. (now Gurit UK Ltd.). Semi-impregnated fabrics offer an efficient way of molding thick composites, such as a root prefab, with consistent high quality. In this example, the SPRINT material is laid into a mold before fixating the female threaded steel inserts into the mold, and then laying subsequent layers of semi-impregnated fabric on top. The layup is then consolidated with a vacuum bag and cured in an oven. Whilst this method provides a simple, efficient, and high-quality product, using simple tools and equipment, the cost of raw material is extremely high due to the inherent costs of producing pre-impregnated and semi-impregnated fiberglass materials.

The present invention has been devised in view of the examples above and their problems.

The present invention provides a method of manufacturing a wind turbine blade root prefab comprising:
providing, in a molding cavity, at least one fiber layer adjacent to a surface of a fastening element insert for fastening the blade to a hub;
providing a layer of bonding material between the at least one fiber layer and the surface of the fastening element insert;
admitting liquid resin into the mold cavity which infuses the fiber layer; and
curing the resin and bonding material, to bond the fiber layer to the fastening element insert via the layer of bonding material.

Another aspect of the invention provides a wind turbine blade root prefab comprising:
at least one fiber layer adjacent to a surface of a fastening element insert for fastening the blade to a hub; and
a layer of bonding material between the at least one fiber layer and the surface of the fastening element insert,
wherein the fiber layer is infused with resin and is bonded to the fastening element insert by the layer of bonding material.

A further aspect of the invention provides a method of manufacturing a fastening element insert for a wind turbine blade root prefab, wherein the fastening element insert is formed from a metal member and a resin-fiber member having a tapered portion, comprising the steps of inserting the resin-fiber member into a recess in the metal member, such that the tapered portion extends beyond the metal member, and bonding together the metal member and the resin-fiber member.

A yet further aspect of the invention provides a fastening element insert for a wind turbine blade root prefab, wherein the fastening element insert is formed from a metal member and a resin-fiber member having a tapered portion, wherein the resin-fiber member is bonded into a recess in the metal member, such that the tapered portion extends beyond the metal member

Further optional features are defined in the dependent claims.

Embodiments of the invention can provide a manufacturing process that achieves both a low material cost and low cost of manufacturing equipment/tooling, to produce a consistently high quality root prefab with high load carrying capability and low mass.

Embodiments of the invention will now be described, by way of example only, by reference to the accompanying drawings in which:
Fig. 1 is a perspective view of a wind turbine blade root prefab;
Fig. 2 is a schematic cross-section through a root prefab being fabricated in a mold according to a method embodying the invention;
Fig. 3 is a plan view of the root prefab Fig. 2 being fabricated, with the top portion of the mold removed;
Fig. 4 is a perspective view of a component of a fastening element insert for a wind turbine blade root prefab; and
Fig. 5 shows a complete fastening element insert for a wind turbine blade root prefab according to an embodiment of the invention.

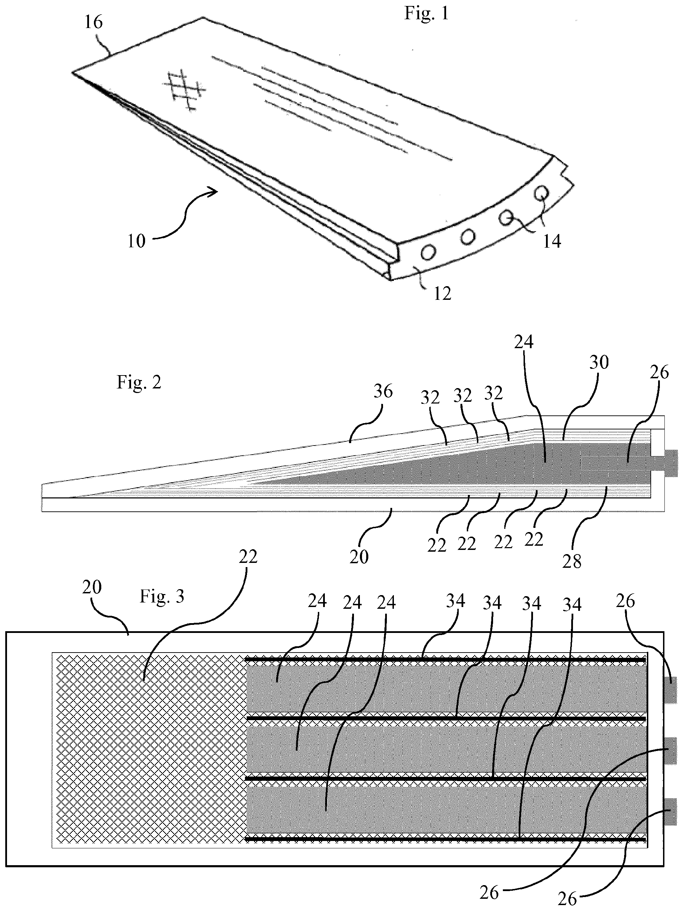

Figure 1 shows a root prefab 10 according to an embodiment of the invention. The root prefab 10 has a root end face 12 that will be proximal to the hub in the finished turbine. The root end face 12 is provided with one or more female threaded bushings 14 to provide means for fixing the finished turbine blade to the hub. The root prefab 10 is optionally chamfered (also referred to as bevelled or tapered) so that it gets thinner toward the distal end 16. The length of the root prefab 10 depends on the application and can be, for example, between 300 mm and 5000 mm in length. The thickness of the root prefab 10 at the root end face 12 is typically in the range of from 50 mm to 200 mm.

As can be seem in Fig. 1, the root prefab 10 of this embodiment is arcuate. A number of such root prefabs, such as 8 or 16, would be integrated into a portion of a main blade shell mold to form the cylindrical blade root. The illustrated root prefab has four bushings 14, but other numbers are possible within the scope of the invention. One form of root prefab has a single bushing, and the root prefab is more in the form of a stick or bar. The circumferential size of the root prefabs can vary from being a single bushing position, to a 180 degree hemi-circle. The choice of root prefab size is a compromise between the number of assembly operations to integrate them into the main shell mold, and the transport/logistical and handling considerations in transferring them from the root prefab manufacturing facility to the main blade molding facility.

A method, embodying the invention, of manufacturing a root prefab will now be described with reference to Figures 2 and 3. A primary mold 20 (also known as a mold tool) is provided to form one surface of the root prefab. Dry structural glass fiber layers 22 are placed into the mold. Each glass fiber layer 22 in this embodiment is preferably a woven fabric, but other layers could be used, such as chopped strand mat. Fastening element inserts 24 are fixed into position in the mold 20. In this embodiment, the fastening element inserts 24 are female threaded steel inserts, and there are three of them to provide three bushing positions in the root prefab. The fastening element inserts 24 are held in place in the mold 20 by means of bolts 26.

However, before placing and fixing the fastening element inserts 24 into the mold, a layer 28 of bonding material is placed between the inserts 24 and the glass fiber layers 22. The bonding material layer 28 is in the form of a polymer film, i.e. a flexible sheet that is solid-like, and has integrity such that it can be laid into the mold as one or more pieces. This bonding material layer 28 is made, for example, from a B-stage semi-cured, toughened epoxy film. A B-stage epoxy is a system wherein the reaction between the resin and the curing agent/hardener is partially complete. Due to this, the system is in a partially cured stage and can be formed into a film. When this system is then reheated to elevated temperatures, the crosslinking is completed and the system fully cures. The thickness of the layer 28 of bonding material is preferably in the range of 0.1 mm to 5 mm, such as approximately 1 mm. Other suitable materials for the layer of bonding material in a partially cured state (or 'B-staged' state) include polyester, polyurethane, phenolic, bismaleimide and cyanate ester.

After fixing the fastening element inserts 24 in the mold 20, a second layer 30 of the bonding material is placed on top (substantially the same as the first layer 28 of bonding material), before the final layers of dry glass fibers 32 are laid down. In between each fastening element insert 24 the void space is filled (partially or completely) either with further dry glass fiber fabric or with a pre-cured fiberglass laminate 34.

To close the molding cavity, either a vacuum bag is placed on top of the materials and is sealed to the primary mold 20, or a secondary rigid, or semi-rigid, upper mold 36 is placed on top and sealed to the primary mold 20. Fig. 2 is a cross-section through the assembly with the upper mold 36 in place, and Fig. 3 shows the primary mold 20, viewed from above, without the upper mold 36, and before the layers 30 and 32 have been laid, but with the fastening element inserts 24 in place.

Next, liquid bulk resin to form the matrix resin is admitted into the molding cavity formed by primary mold 20 and upper mold 36 using the VARTM (vacuum assisted resin transfer molding) process or the RTM (resin transfer molding) process or the LRTM (light resin transfer molding) process or other standard means of resin fiber impregnation. The matrix resin is a thermosetting polymer, for example, epoxy, polyester, vinylester, or polyurethane. The matrix resin infuses or permeates into the fiber layers and the spaces therearound. The molding cavity is then heated to cure (thermoset) the resin, either by placing the entire mold in a curing oven or by using heating elements integrated into the molds 20, 36.

The bonding layer resin material is selected to have a reaction chemistry such that it can co-cure with the bulk resin matrix, so that a toughened, high-strength, connection is made between the fiberglass and metal elements of the root prefab. For example the two co-curing systems are chemically compatible and don't inhibit each other's curing reactions, and will cross-link with each other as they both cure to ensure a good chemical bond. Furthermore, the reaction kinetics and thermodynamics can be selected so that both start curing at similar temperatures, or at a prescribed offset in temperature such that one system starts to cure first and its exothermic reaction is then used to initiate curing of the other system at a higher temperature. Preferably the reaction enthalpy for each system is similar so that the total cure times for each system are similar. Also, the material of the bonding layer 28, 30 is optionally chosen such that its viscosity does not drop too much as its temperature rises, so that it maintains a controlled thickness and does not disperse into the glass fiber layers 22, 32 and resin matrix.

The fastening element inserts 24 are substantially rectangular or trapezoidal in cross-section. This avoids difficulty with draping glass fiber fabrics around curved surfaces. A female thread is machined or formed on the root end of each insert. The blade tip end (distal end) of the inserts is chamfered on one or both sides to allow smooth load transfer from the fiberglass elements. To improve adhesion between the steel and the bonding layer, the steel is surface-treated mechanically and chemically. Mechanical treatment comprises, for example, abrasive blasting to achieve surface roughness to grade Sa 2.5. Chemical treatment can be carried out for example using a silane coupling agent.

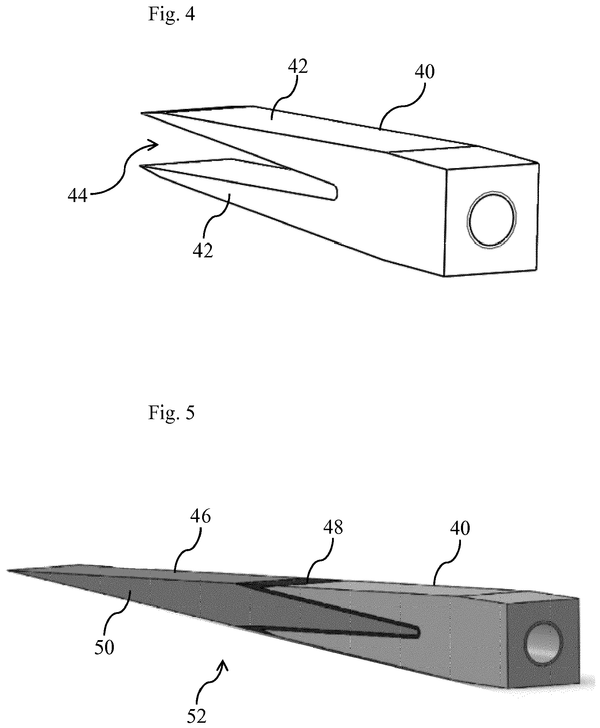

The heaviest elements of this root prefab construction are the fastening element inserts 24, typically made of steel. A further embodiment of the invention is envisaged to alleviate this weight. A simple shortening in the length of the insert would not be appropriate because this would require an increased chamfer angle, thereby increasing the stress concentration at the more abrupt tip end, and reducing the total adhered surface area. To mitigate these effects, a shortened metal member 40 features a double chamfer, as illustrated in Fig. 4. This metal member 40 comprises two projecting teeth 42 separated by a gap or recess 44. Each tooth 42 is tapered, such as by being chamfered on one or both sides, at a shallow angle as with the previous insert 24. This allows the overall surface area for adhesion to be maintained, whilst also maintaining the shallow chamfer angle for efficient load transfer between the metal and fiberglass elements. To ensure a robust connection between the "double-tooth" metal member 40 and the fiberglass layers, the recess 44 between the two chamfered teeth 42 is filled with a separately manufactured fiberglass prefab 46 which is bonded to the metal member 40 using a toughened, e.g. epoxy, bonding paste 48. The fiberglass prefab 46 has a tapered portion 50 at one end that extends beyond the metal member 40. The opposite end of the fiberglass prefab 46 is also tapered and fits into the recess 44 in the metal member 40. The resulting hybrid metal-fiberglass fastening member insert 52 has substantially the same geometry as the purely steel insert 24 described above, but is significantly lighter in weight. The process of building the root prefab 10 using the pre-manufactured hybrid double-tooth insert 52 is the same as that described above with reference to Figures 2 and 3, but replacing one or more of the inserts 24 with the hybrid fastening element insert 52.

The fastening element inserts 24, 52 have been described and illustrated in the above embodiments as having a female thread to provide the means for fastening, but this is merely one example of a fastening element, and alternative fastening could be provided such as projecting male threaded studding, or other suitable mechanical means for ultimately fixing the blade to the hub. The fastening element inserts 24, or metal members 40, described above are made of steel in the preferred embodiments, but this is not essential, and they could be made of other materials such as suitable metals, alloys, ceramics, composites and so forth.

Although the preferred embodiments described above use glass fibers to make the fiberglass prefabs, this is by way of example only, and other resin-fiber composites are contemplated as being used, including carbon-fiber composites.

## Claims

1. A method of manufacturing a wind turbine blade root prefab comprising:
providing, in a molding cavity, at least one fiber layer adjacent to a surface of a fastening element insert for fastening the blade to a hub;
providing a layer of bonding material between the at least one fiber layer and the surface of the fastening element insert;
admitting liquid resin into the mold cavity which infuses the fiber layer; and
curing the resin and bonding material, to bond the fiber layer to the fastening element insert via the layer of bonding material.

2. A method according to claim 1, wherein the bonding material initially provided into the molding cavity is a partially cured material.

3. A method according to claim 2, wherein the partially cured material is a B-stage epoxy.

4. A method according to claim 2 or 3, wherein the bonding material is in the form of a film.

5. A method according to any preceding claim wherein the fastening element insert is formed from a metal member and a resin-fiber member having a tapered portion, and comprising the steps of inserting the resin-fiber member into a recess in the metal member, such that the tapered portion extends beyond the metal member, and bonding together the metal member and the resin-fiber member.

6. A method according to claim 5, wherein the recess in the metal member comprises a gap between two projecting chamfered teeth.

7. A wind turbine blade root prefab comprising:
at least one fiber layer adjacent to a surface of a fastening element insert for fastening the blade to a hub; and
a layer of bonding material between the at least one fiber layer and the surface of the fastening element insert,
wherein the fiber layer is infused with resin and is bonded to the fastening element insert by the layer of bonding material.

8. A wind turbine blade root prefab according to claim 7, wherein the bonding material comprises a film of cured epoxy.

9. A wind turbine blade root prefab according to claim 7 or 8, wherein the fastening element insert is formed from a metal member and a resin-fiber member having a tapered portion, wherein the resin-fiber member is bonded into a recess in the metal member, such that the tapered portion extends beyond the metal member.

10. A wind turbine blade root prefab according to claim 9, wherein the recess in the metal member comprises a gap between two projecting chamfered teeth.

11. A wind turbine blade root prefab according to claim 7, 8, 9 or 10, comprising a plurality of fastening element inserts.

12. A method of manufacturing a fastening element insert for a wind turbine blade root prefab, wherein the fastening element insert is formed from a metal member and a resin-fiber member having a tapered portion, comprising the steps of inserting the resin-fiber member into a recess in the metal member, such that the tapered portion extends beyond the metal member, and bonding together the metal member and the resin-fiber member.

13. A method according to claim 12, wherein the recess in the metal member comprises a gap between two projecting chamfered teeth.

14. A fastening element insert for a wind turbine blade root prefab, wherein the fastening element insert is formed from a metal member and a resin-fiber member having a tapered portion, wherein the resin-fiber member is bonded into a recess in the metal member, such that the tapered portion extends beyond the metal member.

15. A method according to claim 14, wherein the recess in the metal member comprises a gap between two projecting chamfered teeth.
